# EUROPÄISCHE PATENTSCHRIFT

(11) **EP 1 335 244 B1**
(45) Veröffentlichungstag und Bekanntmachung des Hinweises auf die Patenterteilung: **07.02.2007**
(21) Anmeldenummer: 02026149.1
(22) Anmeldetag: 25.11.2002
(51) Int. Cl.: G03D 15/00

(54) **Fototasche zum Transport von Fotografien und Fotodatenträgern**
Envelope for transporting photographic images and photodata carriers
Pochette pour le transport d'images photographiques et des supports de données photographiques

(30) Priorität: 07.02.2002 DE 20201833 U
(43) Veröffentlichungstag der Anmeldung: 13.08.2003
(73) Patentinhaber: Richard Haag & Sohn GmbH + Co. KG, 73235 Weilheim/Teck (DE)
(72) Erfinder: Stecher, Volker, 73230 Kirchheim/Teck (DE); Buyukyaglioglu, Galip, 72658 Bempflingen (DE)
(74) Vertreter: Ruckh, Rainer Gerhard

(56) Entgegenhaltungen:
- EP-A- 0 737 892
- EP-A- 1 134 615
- DE-A- 19 709 540
- DE-U- 29 713 833

## Beschreibung

Die Erfindung betrifft ein Verfahren zum Transport von Fotografien und Fotodatenträgern.

Für einen derartigen Transport werden Fototaschen eingesetzt. Fototaschen werden in hoher Stückzahl als Versandtaschen benutzt, um Filme von Endverbrauchern an Fotolabors zu senden und um die in den Fotolabors aus den Filmen erstellten Fotografien zurück an den Endverbraucher zu senden.

Bekannte Fototaschen dieser Art bestehen aus Papier und weisen eine Bildertasche auf, in welcher sowohl Filmdosen mit den zu entwickelnden Filmen als auch die aus den Filmen hergestellten Fotografien transportiert werden können. Zudem ist vorzugsweise eine weitere Tasche zur Aufnahme von Negativen vorgesehen. Die so ausgebildete Fototasche weist typischerweise die Form eines rechteckigen Kuverts auf, welches mit einer Klappe abschließbar ist. Als Abholausweis ist zweckmäßig ein Abrissstreifen an der Fototasche vorgesehen.

Derartige Fototaschen liegen in Geschäften wie Supermärkten, Drogeriemärkten oder Fotogeschäften an entsprechenden Stationen für den Endverbraucher gut zugänglich aus.

Unter Vermerk seiner Adresse gibt der Endverbraucher seinen zu entwickelnden Film in einer Filmdose in die Fototasche ein, wobei der Endverbraucher den Abrissstreifen von der Fototasche als Beleg abtrennt. Der in der Fototasche gelagerte Film wird von dem Geschäft an ein Fotolabor gesendet, wo dieser entwickelt wird. Die so erstellten Fotografien werden in derselben Fototasche an den Supermarkt oder dergleichen zurückgesandt. Dort kann der Endverbraucher die Fototasche abholen.

Dieses Logistikkonzept hat sich für die Entwicklung von mit Analogkameras erstellten Filmen bewährt.

In den vergangen Jahren sind vermehrt auch Digitalkameras am Markt erhältlich. Die mit derartigen Digitalkameras aufgenommenen Bilder werden als digitale Informationen in Speichermedien der Digitalkameras gespeichert und können insbesondere an der Digitalkamera selbst sofort nach der Aufnahme betrachtet werden. Als Speichermedien für Digitalkameras werden typischerweise sogenannte Flash-Speicher eingesetzt, die in unterschiedlichen Ausführungsformen wie zum Beispiel Smart Media Speicherkarten oder Compact Flash Speicherkarten erhältlich sind.

Derartige Speichermedien bilden mehrfach verwendbare Wechselspeicher mittels derer typischerweise mehrere Tausend Schreib- und Löschzyklen durchführbar sind.

Nachteilig bei diesen Speichermedien ist deren hohe mechanische Empfindlichkeit sowie deren hohe Anschaffungskosten.

Der Anwender einer Digitalkamera kann die in den Speichermedien gespeicherten Daten in eine Rechnereinheit wie zum Beispiel einen Personalcomputer übertragen. Die Bilder können dann an einem Drucker ausgedruckt werden. Nachteilig hierbei ist, dass derartige Ausdrucke eine erheblich geringere Qualität als in einem Fotolabor erstellte Fotografien aufweisen.

Um zu derartigen Fotografien zu gelangen, kann der Benutzer einer Digitalkamera prinzipiell seine in dem Personalcomputer gespeicherten Daten per Email an ein Fotolabor senden. Dort können aus diesen Daten Fotografien erstellt werden, die dem Benutzer auf dem Postweg zugesandt werden können. Nachteilig hierbei sind zum einen die unerwünscht hohen Übertragungszeiten der Daten. Weiterhin ist diese Methode für den Massenmarkt nicht geeignet, da die Hardware- und Softwarevoraussetzungen für die notwendige Datenübertragung bei einem Großteil der potentiellen Kunden nicht zur Verfügung stehen oder nicht in dem erforderlichen Umfang genutzt werden bzw. werden können.

Aus der EP 1 134 615 A1 ist eine Phototasche bekannt, die aus einem Papierfalzteil oder dergleichen hergestellt werden kann. Die Fototasche weist neben einer Tasche zur Aufnahme eine weitere Tasche zur Aufnahme für eine Compact Disk auf. Die Tasche hat ein Sichtfenster für die Compact Disk. Die Tasche ist größer als der Durchmesser der Compact Disk, so dass die Compact Disk in diese leicht einführbar ist. Dafür ist keine Lagefixierung der Compact Disk innerhalb der Tasche gegeben.

Die DE 297 13 833 U1 betrifft eine Versandtasche für Compact Disks in Form einer Papiertasche mit einer Rückwand und einer mit dieser im Bodenbereich und den Seiten der Tasche verbundenen Vorderwand sowie einem an die Vorderwand angeformten Umschlagbereich zum Verschließen der Öffnung der Tasche, wobei in der Rückwand eine Einschubtasche für eine Compact Disk oder eine Diskette angeordnet ist.

Die EP 0 737 892 A1 betrifft eine Fototasche mit einem Taschenabschnitt aus einer Rückwand und einer damit an zwei Seiten und dem einer Öffnung der Tasche gegenüberliegenden bodenseitigen Rand verbundenen Vorderwand zum Aufnehmen von Bildern und Filmen. Eine Deckwand ist zum Verschlie-ßen der Öffnung um einen nahe der Öffnung liegenden Rand umschlagbar. Damit die Tasche auch dann verschlossen bleibt, wenn sie nicht in die eigentliche Fotolaborarbeitstasche eingelegt ist, weist die Vorderwand in einem Bereich, der von der Deckwand im umgeschlagenen Zustand abgedeckt ist, einen Abschnitt wenig beziehungsweise nicht fasernden Materials und die Deckwand an der entsprechenden Stelle eine Ausnehmung auf.

Die DE 197 09 540 A1 betrifft ein Verfahren zur Herstellung eines Verschlusses für Verpackungen. Ein solcher Verschluss wird hergestellt, indem auf derselben Seite eines flächigen Rohmaterials zumindest zwei voneinander getrennt Haftbereiche ausgewählt werden, auf einem ersten und einem zweiten dieser Haftbereiche jeweils ein Kontakthaftmittel aufgebracht wird, zumindest eine Aussparung in einem Teilbereich des flächigen Rohmaterials angebracht wird, und ein einteiliger Grundzuschnitt der Verpackung aus dem flächigen Rohmaterial hergestellt wird.

Der Erfindung liegt die Aufgabe zugrunde, ein Verfahren der eingangs genannten Art bereitzustellen, mit welchem bei möglichst einfachem Aufbau einer Fototasche eine hohe Funktionalität erzielt wird.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die für das erfindungsgemäßeVerfahren verwendete Fototasche beinhaltet eine Bildertasche in deren Innenraum Fotografien und Filmdosen als Fotodatenträger transportierbar sind. Weiter weist die als Papierfalzteil ausgebildete Fototasche eine Aufnahme für eine Compact Disk auf, auf welcher digitale Fotodaten gespeichert sind. Diese Aufnahme weist eine Ausstanzung auf, welche geneigt zur Längsrichtung der Bildertasche verläuft. Zudem verlaufen zumindest die Randbereiche der Ausstanzung längs einer Geraden. Eine in die Ausstanzung eingeführte Compact Disk ist in einer Ecke der Bildertasche angeordnet und liegt an einem seitlichen und am unteren Rand der Bildertasche an.

Die Compact Disk wird über die Ausstanzung in den Innenraum der Fototasche, insbesondere der Bildertasche, eingeführt, wobei ein Teil der Compact Disk noch über die Ausstanzung nach außen vor steht. Die Compact Disk liegt damit in der Ausstanzung sowie an Abschnitten der Innenseiten der Ränder der Fototasche bzw. der Bildertasche gegen Verschiebungen gesichert in einer Sollposition.

In einer vorteilhaften Ausgestaltung der Erfindung bildet die Aufnahme für die Compact Disk selbst eine Tasche, welche durch einen Papierteil von der Bildertasche getrennt ist.

Die für das erfindungsgemäße Verfahren eingesetzte Fototasche entspricht in ihrem Aufbau weitgehend bekannten Fototaschen, welche typischerweise Bildertaschen zur Aufnahme von Filmdosen und Fotografien sowie Aufnahmen für Negative aufweisen. Die Aufnahme für die Compact Disk ist mit geringem Aufwand in der Fototasche integrierbar und nutzt zudem dort vorhandene Komponenten wie zum Beispiel die Bildertasche.

Da gemäß dem erfindungsgemäßen Verfahren in der Fototasche eine Aufnahme für die Compact Disk integriert ist, können somit mit Digitalkameras aufgenommene Bilder auf einfache und kostengünstige Weise an Fotolabors zur Herstellung von Fotografien versandt werden.

Besonders vorteilhaft eignet sich die Fototasche sowohl zum Transport von Filmdosen mit Filmen einer konventionellen Kamera als auch zum Transport von Compact Disks, auf welchen die digitalen Bildinformationen einer Digitalkamera gespeichert sind.

Mit dem erfindungsgemäßen Verfahren wird damit ein universelles Logistikkonzept bereitgestellt, mittels dessen Bilder von konventionellen Kameras und Digitalkameras gleichermaßen entwickelt werden können.

Das Logistikkonzept setzt dabei auf das für konventionelle Kameras bekannte Konzept zur Entwicklung von Filmen auf und kann somit mit geringem Aufwand umgesetzt werden.

Die Fototaschen werden hierzu für Endverbraucher zugänglich an entsprechenden Stationen in Geschäften wie Supermärkten, Drogeriemärkten, Fotogeschäften oder dergleichen ausgelegt.

Hat ein Endverbraucher mit einer konventionellen Kamera Bilder aufgenommen, nutzt dieser die Fototasche in bekannter Weise, um damit eine Filmdose mit einem zu entwickelnden Film unterzubringen.

Hat ein Endverbraucher mit einer Digitalkamera Bilder aufgenommen, nutzt dieser ein Terminal an der Station, um die Daten auf dem Speichermedium seiner Digitalkamera auf eine an der Station ausliegende Compact Disk zu übertragen, die als CD-ROM oder gegebenenfalls als DVD-ROM ausgebildet sein kann.

Diese Compact Disk wird dann in die Aufnahme der Fototasche eingegeben. Der Vorteil hierbei besteht darin, dass die Compact Disk einen robusten, kostengünstigen Datenträger bildet, der ohne Gefahr einer Beschädigung in der Fototasche transportiert werden kann. Die teuren und gegen Beschädigungen anfälligen Speichermedien können nach Überschreiben der digitalen Daten auf die Compact Disk vom Endverbraucher wieder mitgenommen werden und damit sofort wieder verwendet werden.

Unabhängig davon, ob der Endverbraucher in die Fototasche eine Compact Disk oder eine Filmdose einlegt, vermerkt dieser auf der Fototasche seinen Namen und seine Adresse. Die so gekennzeichnete Fototasche wird dann an das Fotolabor zur Herstellung von Fotografien anhand des Films oder von Fotodaten auf der Compact Disk gesandt. Die erstellten Fotografien werden in der Fototasche an das Geschäft zurückgesandt, wo der Endverbraucher die Fotografien gegen Vorlage eines Abholausweises abholen kann. Bei Erstellung von Fotografien aus den Fotodaten einer Compact Disk wird zweckmäßigerweise ein Indexprint mit dem Inhalt der Compact Disk zusammen mit den Fotografien ausgeliefert.

Dieses Logistikkonzept ist für den Endverbraucher äußerst einfach nutzbar. Weiterhin ist das Logistikkonzept in den jeweiligen Geschäften und in den Fotolabors ohne großen Aufwand umsetzbar.

Die Erfindung wird im Nachstehenden anhand der Zeichnungen erläutert. Es zeigen.
- Figur 1:: Schematische Darstellung eines ersten Ausführungsbeispiels der erfindungsgemäßen Fototasche.
- Figur 2:: Querschnitt durch die Fototasche gemäß Figur 1.
- Figur 3:: Querschnittsdarstellung einer Abwandlung der Ausführungsform der Fototasche gemäß Figuren 1 und 2.

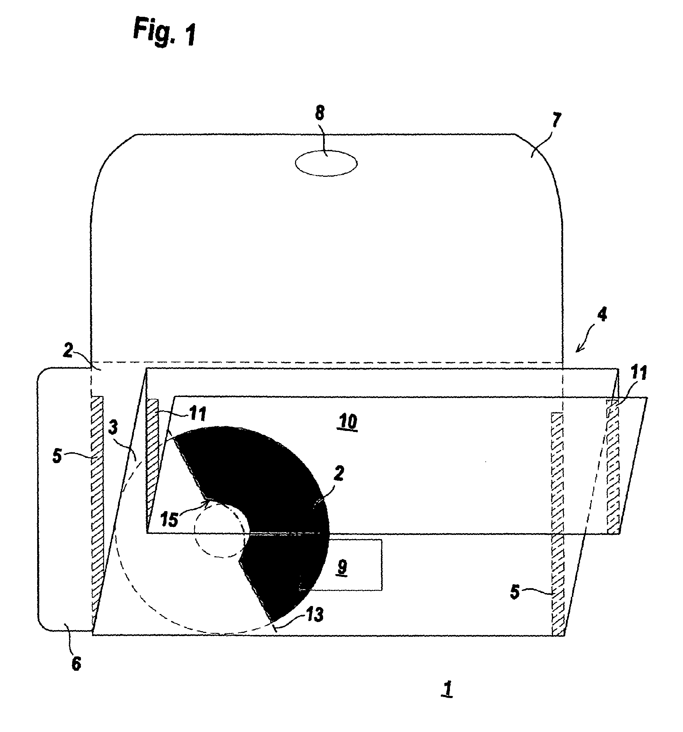

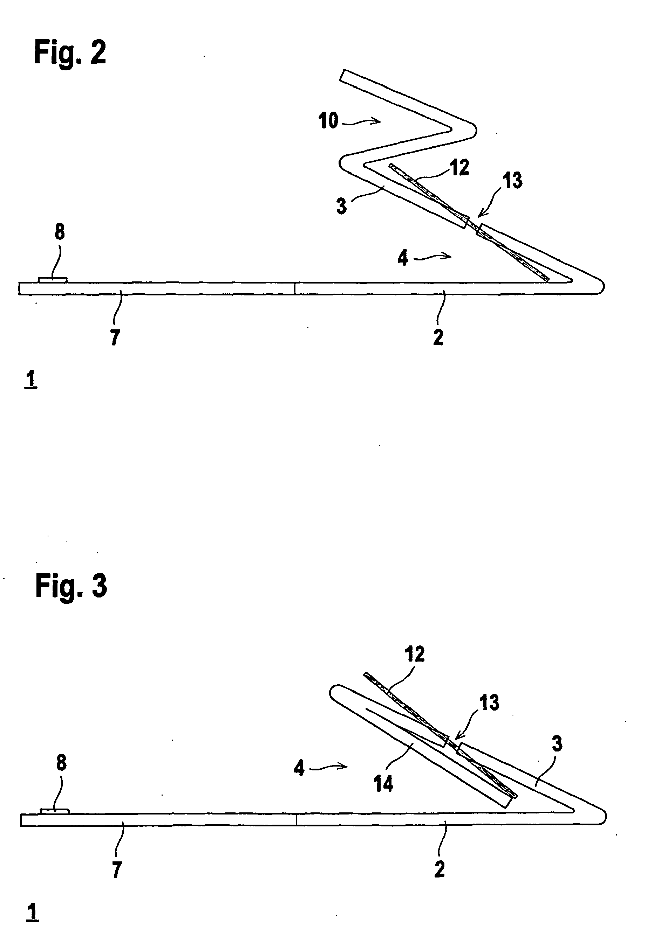

Die Figuren 1 und 2 zeigen ein erstes Ausführungsbeispiel einer Fototasche 1 zum Transport von nicht dargestellten Fotografien und Fotodatenträgern.

Die Fototasche 1 besteht im vorliegenden Fall aus einem Papierfalzteil. Das Papierfalzteil wird dabei zu einer Fototasche 1 verarbeitet, die im Wesentlichen die Form eines Kuverts mit einer rechteckigen Kontur aufweist.

Das Papierfalzteil wird derart gefalzt, dass zwei flächengleiche, rechteckige Abschnitte dieses Teils aufeinander liegen und so den Unterteil 2 und den Oberteil 3 einer Bildertasche 4 bilden. Der untere Rand der Bildertasche 4 ist von der Falzkante zwischen dem Unterteil 2 und dem Oberteil 3 gebildet. Die seitlichen Ränder des Unterteils 2 und Oberteils 3 sind mit Klebestreifen 5 aneinander fixiert, so dass die Bildertasche 4 seitlich geschlossen ist.

Über einen seitlichen Rand der Bildertasche 4 steht ein Abrissstreifen 6 hervor, welcher als Abholausweis nutzbar ist und hierfür von der Bildertasche 4 bei Bedarf abgetrennt werden kann.

Der obere Rand der Bildertasche 4 bildet eine Öffnung über welche Fotografien oder eine Filmdose mit einem zu entwickelnden Film in den Innenraum der Bildertasche 4 eingeführt bzw. diese dem Innenraum entnommen werden können.

Über den oberen Rand des Unterteils 2 steht eine einstückig mit diesem ausgebildete Klappe 7 hervor. Durch Umlegen der Klappe 7 auf die Außenseite des Oberteils 3 kann die Bildertasche 4 verschlossen werden. Zur Fixierung der Klappe 7 am Oberteil 3 ist ein Klebeverschluss vorgesehen. Der Klebeverschluss besteht aus einem Klebefeld 8 an der Klappe 7, welches in der Schließposition der Klappe 7 auf eine Folie 9 auf der Außenseite des Oberteils 3 aufliegt. Die Folie 9 besteht aus Kunststoff, so dass das Klebefeld 8 mehrfach auf der Folie 9 fixierbar ist und wieder von dieser gelöst werden kann.

An den oberen Rand des Oberteils 3 der Bildertasche 4 ist im vorliegenden Ausführungsbeispiel ein weiterer Abschnitt des Papierfalzteils eingefalzt, welcher eine Negativtasche 10 zur Aufnahme von Negativen bildet. Die Negativtasche 10 ist mittels Klebestreifen 11 an ihren seitlichen Rändern verschlossen. Über die offene Oberseite der Negativtasche 10 können Negative von entwickelten Filmen eingeführt werden.

Weiterhin weist die Fototasche 1 gemäß den Figuren 1 und 2 eine Aufnahme für eine Compact Disk auf. Die Compact Disk ist im vorliegenden Fall von einer CD-ROM 12 oder alternativ von einer DVD-ROM gebildet, wobei auf dieser digitale Fotodaten von einer Digitalkamera abgespeichert sind.

Die Aufnahme für die Compact Disk weist eine Ausstanzung 13 auf, welche in den Oberteil 3 der Bildertasche 4 eingearbeitet ist. Die Länge der Ausstanzung 13 ist an den Durchmesser der Compact Disk angepasst. Die Länge der Ausstanzung 13 ist dabei geringfügig größer als der Durchmesser der Compact Disk.

Die Ausstanzung 13 zur Einführung der Compact Disk in die Bildertasche 4 verläuft in einem vorgegebenen Neigungswinkel zur Längsrichtung der Fototasche 1. Dabei verläuft die Ausstanzung 13 im vorliegenden Fall von der linken oberen Ecke des Oberteils 3 schräg nach unten in Richtung des unteren Randes des Oberteils 3.

Die Compact Disk wird bei geöffneter Klappe 7 und hochgeklappter Negativtasche 10 in die Ausstanzung 13 eingeschoben und mit ihrem unteren Teil in den Innenraum der Bildertasche 4 eingeführt, bis der Rand der Compact Disk am unteren und seitlichen Rand der Bildertasche 4 anliegt. Die Lage der Ausstanzung 13 ist so gewählt, dass dabei etwa die Hälfte der Compact Disk im Innenraum der Bildertasche 4 liegt und die zweite Hälfte über die Ausstanzung 13 nach außen hervorsteht. Da der Durchmesser der Compact Disk nur geringfügig kleiner ist als die Länge der Ausstanzung 13 liegt die auf dem unteren Rand der Bildertasche 4 aufsitzende Compact Disk mit geringem Spiel in der Ausstanzung 13 und ist auf diese Weise sicher gegen ungewollte Verschiebungen in einer Sollposition gelagert

Durch die schräg verlaufende Ausstanzung 13 wird eine erhöhte Sicherheit und Qualität des Herstellungsprozesses der Fototasche 1 erhalten. Dies beruht darauf, dass bei der Bearbeitung des Papierstanzteils in entsprechenden Bearbeitungsmaschinen ein Aufklaffen dieses Teils im Bereich der Ausstanzung 13 vermieden wird, welches zu Beschädigungen des Papierstanzteils führen könnte.

Wie aus Figur 1 ersichtlich verläuft die Ausstanzung 13 nur in ihren Randbereichen längs einer Geraden. Im Zentrum verläuft die Ausstanzung 13 längs eines Kreisbogensegments, wodurch in diesem Bereich eine Lasche 15 entsteht. Diese Lasche 15 erleichtert das Einführen der Compact Disk in die Ausstanzung 13.

Die über die Ausstanzung 13 in die Bildertasche 4 eingeführte Compact Disk ist wiederum in einer Sollposition fixiert. Die Lage der Ausstanzung 13 ist dabei derart gewählt, dass die Ränder des in der Bildertasche 4 liegenden Teils der Compact Disk sowohl an einem seitlichen als auch am unteren Rand der Bildertasche 4 anliegen, wodurch ein besonders sicherer Halt der Compact Disk gewährleistet ist.

Bei geschlossener Bildertasche 4 liegt die Negativtasche 10 über dem frei liegenden Teil der Compact Disk und schützt diese gegen Beschädigungen. Prinzipiell kann die Negativtasche 10 auch nur einen Teil der Compact Disk überdecken. Zudem überdeckt die Klappe 7 die Negativtasche 10 und die Compact Disk und sorgt so für einen weiteren Schutz. Dabei ist die Höhe der Klappe 7 größer als die Höhe der Negativtasche 10 so dass die Klappe 7 die Negativtasche 10 vollständig überdeckt.

Ein Benutzer der Fototasche 1 kann je nach Bedarf eine Filmdose mit einem Film oder eine Compact Disk mit digitalen Fotodaten in der Fototasche 1 lagern und vorzugsweise über ein Geschäft an ein Fotolabor zur Herstellung von Fotografien senden.

Im ersten Fall werden vom Fotolabor die Fotografien in der Bildertasche 4 und die entsprechenden Negative in die Negativtasche 10 eingeführt und so an den Benutzer zurückgesandt.

Im zweiten Fall werden Fotografien mit einem Indexprint, mit welchem die auf der Compact Disk enthaltenen Bilder angezeigt werden, in die Bildertasche 4 eingeführt. Die Compact Disk wird wieder in die Ausstanzung 13 eingeführt. Die so befüllte Fototasche 1 wird an den Benutzer zurückgesandt.

Figur 3 zeigt eine Abwandlung der Ausführungsform der Fototasche 1 gemäß dem Ausführungsbeispiel gemäß den Figuren 1 und 2.

Im Unterschied zu der Ausführungsform gemäß den Figuren 1 und 2 wird der an dem oberen Rand des Oberteils 3 der Bildertasche 4 anschließende Abschnitt des Papierfalzteils nicht zur Ausbildung einer Negativtasche 10 verwendet, sondern ist in den Innenraum der Bildertasche 4 eingefalzt, so dass dieser eine Trennwand 14 bildet, der den Innenraum der Bildertasche 4 von der in der Ausstanzung 13 liegenden Compact Disk trennt. Durch diese Trennwand 14 ist die Aufnahme für die Compact Disk in Form einer Tasche ausgebildet, die vom Innenraum der Bildertasche 4 getrennt ist. Dadurch ist die Compact Disk gegen Beschädigungen beim Einführen von Fotografien in die Bildertasche 4 geschützt.

Für den Fall, dass die Fototasche 1 analog zur Ausführungsform gemäß Figur 1 eine Negativtasche 10 aufweisen soll kann ein Papierteil als Trennwand 14 zur Bildertasche 4 an der Innenseite des Oberteils 3 angeklebt werden.

## Patentansprüche

1. Verfahren zum Transport von Fotodatenträgern in Form von Fotografien und Filmdosen sowie Compact Disks, auf welcher digitale Fotodaten gespeichert sind, in einer aus einem Papierfalzteil bestehenden Fototasche (1) mit einer Bildertasche (4) zur Aufnahme der Fotodatenträger und einer Aufnahme für eine Compact Disk, wobei die Aufnahme eine Ausstanzung (13) aufweist
**dadurch gekennzeichnet dass** die Ausstanzung geneigt zur Längsrichtung der Bildertasche (4) verläuft und dass zumindest die Randbereiche der Ausstanzung längs einer zur Längsrichtung der Bildertasche geneigten Geraden verlaufen, wobei eine in die Ausstanzung (13) eingeführte Compact Disk in einer Ecke der Bildertasche (4) angeordnet ist und an einem seitlichen und am unteren Rand der Bildertasche (4) anliegt.

2. Verfahren nach Anspruch 1, wobei die in die Fototasche (1) eingeführte Compact Disk als CD-ROM (12) oder DVD-ROM ausgebildet ist.

3. Verfahren nach einem der Ansprüche 1 oder 2, wobei die Fototasche (1) eine Aufnahme für Negative aufweist.

4. Verfahren nach einem der Ansprüche 1 bis 3, wobei die in der Aufnahme gelagerte Compact Disk in einer Sollposition fixiert ist, in welcher ein Teil der Compact Disk über die Ausstanzung (13) in den Innenraum der Bildertasche (4) eingeführt ist, so dass Randbereiche der Compact Disk an Abschnitten der Innenseiten der Ränder der Bildertasche (4) anliegen.

5. Verfahren nach einem der Ansprüche 1 bis 4, wobei die Länge der Ausstanzung (13) an den Durchmesser der Compact Disk angepasst ist.

6. Verfahren nach Anspruch einem der Ansprüche 1 bis 5, wobei die Ausstanzung (13) in ihrem Zentrum zur Ausbildung einer Lasche (15) längs eines Kreisbogensegments verläuft.

7. Verfahren nach einem der Ansprüche 1 bis 6, wobei die Bildertasche (4) von zwei aufeinander liegenden flächengleichen Abschnitten des Papierfalzteils begrenzt ist, wobei ein erster Abschnitt den Unterteil (2) und ein zweiter Abschnitt den Oberteil (3) der Bildertasche (4) bildet, und wobei die Ausstanzung (13) in den Oberteil (3) der Bildertasche (4) eingearbeitet ist.

8. Verfahren nach Anspruch 7, wobei die Bildertasche (4) an ihrem oberen Rand eine Öffnung aufweist, welche mittels einer an den oberen Rand des Unterteils (2) der Bildertasche (4) anschließenden Klappe (7) verschließbar ist, wobei die auf dem Oberteil (3) aufliegende Klappe (7) die Ausstanzung (13) abdeckt.

9. Verfahren nach einem der Ansprüche 7 oder 8, wobei die Bildertasche (4) eine rechteckige Kontur aufweist.

10. Verfahren nach einem der Ansprüche 1 bis 9, wobei die Aufnahme für eine Compact Disk als Tasche ausgebildet ist, welche von der Bildertasche (4) getrennt ist und deren Öffnung von der Ausstanzung (13) gebildet ist.

11. Verfahren nach Anspruch 10, wobei die Tasche eine Trennwand (14) in Form eines Papierteils aufweist.

12. Verfahren nach Anspruch 11, wobei der Papierteil in die Bildertasche (4) eingefalzt ist.

13. Verfahren nach Anspruch 12, wobei der Papierteil in die Bildertasche (4) eingeklebt ist.

14. Verfahren nach Anspruch 3 bis 13, wobei die Aufnahme für die Negative von einer Negativtasche (10) gebildet sind.

15. Verfahren nach Anspruch 14, wobei die Negativtasche (10) am oberen Rand des Oberteils (3) der Bildertasche (4) fixiert ist.

16. Verfahren nach einem der Ansprüche 1 bis 15, wobei in der Bildertasche ein Indexprint mit dem Speicherinhalt der Compact Disk transportiert wird.

17. Verfahren nach einem der Ansprüche 1 bis 16, an einem seitlichen Rand der Bildertasche ein Abrissstreifen (6) als Abholausweis angeordnet ist.

## Claims

1. Method of transporting photographic data carriers in the form of photographs and film canisters as well as compact discs, on which digital photographic data are stored, in a photo-wallet (1), which consists of a paper folded part, with a print pocket (4) for reception of the photographic data carrier and a receptacle for a compact disc, wherein the receptacle has a punching-out (13), **characterised in that** the punching-out extends at an inclination relative to the length direction of the print pocket (4) and that at least the edge regions of the punching-out extend along a straight line inclined relative to the longitudinal direction of the print pocket, wherein a compact disc introduced into the punching-out (13) is arranged in a corner of the print pocket (4) and bears against a lateral edge and the lower edge of the print pocket (4).

2. Method according to claim 1, wherein the compact disc introduced into the photo-wallet (1) is constructed as a CD-ROM (12) or DVD-ROM.

3. Method according to one of claims 1 and 2, wherein the photo-wallet (1) has a receptacle for negatives.

4. Method according to one of claims 1 to 3, wherein the compact disc mounted in the receptacle is fixed in a desired position in which a part of the compact disc is introduced by way of the punching-out (13) into the interior space of the print pocket (4) so that the edge regions of the compact disc bear against sections of the inner sides of the edges of the print pocket (4).

5. Method according to one of claims 1 to 4, wherein the length of the punching-out (13) is matched to the diameter of the compact disc.

6. Method according to one of claims 1 to 5, wherein the punching-out (13) extends along an arc segment in its centre for formation of a tongue (15).

7. Method according to one of claims 1 to 6, wherein the print pocket (4) is bounded by two sections of the paper folded part resting equally in area on one another, wherein a first section forms the lower part (2) and a second section the upper part (3) of the print pocket (4) and wherein the punching-out (13) is formed in the upper part (3) of the print pocket (4).

8. Method according to claim 7, wherein the print pocket (4) has at its upper edge an opening which is closable by means of a flap (7) connected with the upper edge of the lower part (2) of the print pocket (4), wherein the flap (7) lying on the upper part (3) covers the punching-out (13).

9. Method according to one of claims 7 and 8, wherein the print pocket (4) has a rectangular profile.

10. Method according to one of claims 1 to 9, wherein the receptacle for a compact disc is constructed as a pocket which is separate from the print pocket (4) and the opening of which is formed by the punching-out (13).

11. Method according to claim 10, wherein the pocket has a separating wall (14) in the form of a paper part.

12. Method according to claim 11, wherein the paper part is folded into the print pocket (4).

13. Method according to claim 12, wherein the paper part is glued into the print pocket (4).

14. Method according to claim 3 to 13, wherein the receptacle for the negatives is formed by a negative pocket (10).

15. Method according to claim 14, wherein the negative pocket (10) is fixed to the upper edge of the upper part (3) of the print pocket (4).

16. Method according to one of claims 1 to 15, wherein an index print with the storage content of the compact disc is transported in the print pocket.

17. Method according to one of claims 1 to 16, wherein a tear-off strip (6) as collection evidence is arranged at a lateral edge of the print pocket.

## Revendications

1. Procédé pour le transport de supports de données photographiques sous la forme de photographies et de boîtes de film ainsi que de disques compacts sur lesquels sont stockées des données photographiques numériques dans une pochette photo (1) constituée d'une pièce pliée en papier avec une pochette pour photos (4) servant à recevoir les supports de données photographiques et un logement pour un disque compact, le logement présentant une découpe (13), **caractérisé par le fait que** la découpe est inclinée par rapport à la direction longitudinale de la pochette pour photos (4) et qu'au moins les zones de bord de la découpe (13) s'étendent le long d'une droite inclinée par rapport à la direction longitudinale de la pochette pour photos, un disque compact introduit dans la découpe (13) étant disposé dans un angle de la pochette pour photos (4) et étant adjacent à un bord latéral et au bord inférieur de la pochette pour photos (4).

2. Procédé selon la revendication 1, selon lequel le disque compact introduit dans la pochette photo (1) est conçu comme CD-ROM (12) ou DVD-ROM.

3. Procédé selon l'une des revendications 1 ou 2, selon lequel la pochette photo (1) présente un logement pour des négatifs.

4. Procédé selon l'une des revendications 1 à 3, selon lequel le disque compact placé dans le logement est fixé dans une position de consigne dans laquelle une partie du disque compact est introduite à l'intérieur de la pochette pour photos (4) par la découpe (13) de manière que des zones de bord du disque compact soient adjacentes à des parties des faces intérieures des bords de la pochette pour photos (4).

5. Procédé selon l'une des revendications 1 à 4, selon lequel la longueur de la découpe (13) est adaptée au diamètre du disque compact.

6. Procédé selon l'une des revendications 1 à 5, selon lequel la découpe (13) s'étend en son centre le long d'un segment d'arc de cercle de manière à former une languette (15).

7. Procédé selon l'une des revendications 1 à 6, selon lequel la pochette pour photos (4) est limitée par deux parties de la pièce pliée en papier de même surface posées l'une sur l'autre, une première partie formant la partie inférieure (2) et une deuxième partie la partie supérieure (3) de la pochette pour photos (4), et selon lequel la découpe (13) est pratiquée dans la partie supérieure (3) de la pochette pour photos (4).

8. Procédé selon la revendication 7, selon lequel la pochette pour photos (4) présente sur son bord supérieur une ouverture qui peut être fermée au moyen d'un rabat (7) faisant suite au bord supérieur de la partie inférieure (2), le rabat (7) reposant sur la partie supérieure (3) recouvrant la découpe (13).

9. Procédé selon l'une des revendications 7 ou 8, selon lequel la pochette pour photos (4) présente un contour rectangulaire.

10. Procédé selon l'une des revendications 1 à 9, selon lequel le logement pour un disque compact est réalisé sous forme de pochette qui est séparée de la pochette pour photos (4) et dont l'ouverture est formée par la découpe (13).

11. Procédé selon la revendication 10, selon lequel la pochette présente une paroi de séparation (14) sous la forme d'une pièce en papier.

12. Procédé selon la revendication 11, selon lequel la pièce en papier est pliée dans la pochette pour photos (4).

13. Procédé selon la revendication 12, selon lequel la pièce en papier est collée dans la pochette pour photos (4).

14. Procédé selon l'une des revendications 3 à 13, selon lequel le logement pour les négatifs est formé par une pochette pour négatifs (10).

15. Procédé selon la revendication 14, selon lequel la pochette pour négatifs (10) est fixée sur le bord supérieur de la partie supérieure (3) de la pochette pour photos (4).

16. Procédé selon l'une des revendications 1 à 15, selon lequel une impression d'index avec le contenu de stockage du disque compact est transportée dans la pochette pour photos.

17. Procédé selon l'une des revendications 1 à 16, selon lequel une bande déchirable (6) est disposée sur un bord latéral de la pochette pour photos pour servir de preuve d'enlèvement.
